# EUROPEAN PATENT APPLICATION

(11) **EP 3 919 687 A1**
(43) Date of publication of application: **08.12.2021**
(21) Application number: 20781972.3
(22) Date of filing: 26.03.2020
(51) Int. Cl.: E02F 3/43, E02F 9/20, G05B 11/36, G05B 13/02, G06N 3/04

(54) **SYSTEM INCLUDING WORK MACHINERY, COMPUTER-EXECUTED METHOD, PRODUCTION METHOD FOR TRAINED ATTITUDE ESTIMATION MODELS, AND LEARNING DATA**

(30) Priority: 04.04.2019 JP 2019072225
(71) Applicant: Komatsu Ltd., Minato-ku Tokyo 107-8414 (JP)
(72) Inventor: SHIMIZU, Minoru, Tokyo 107-8414 (JP)
(74) Representative: Grünecker Patent- und Rechtsanwälte PartG mbB
(86) International application number: PCT/JP2020/013507
(87) International publication number: WO 2020/203596

(57) **Abstract**

There is provided a system including a work machine, comprising a body of the work machine, a work implement attached to the body of the work machine, and a computer (102A). The computer (102A) has a trained target posture estimation model (180) to determine a target posture for the work implement to assume at work. The computer (102A) obtains a period of time elapsing since the work implement started to work, and mechanical data for operation of the body of the work machine and the work implement, uses the trained target posture estimation model (180) to estimate a target posture from the elapsed period of time and the mechanical data, and thus outputs the estimated target posture.

## Description

### TECHNICAL FIELD

The present disclosure relates to a system including a work machine, a computer implemented method, a method for producing a trained posture estimation model, and training data.

### BACKGROUND ART

When a wheel loader is operated to perform an excavation work, the vehicle is moved forward to push a work implement into a mass of soil and the work implement is also raised. Thus, the soil is scooped on the work implement.

Conventionally, in order to perform efficient excavation work, a technique for automatically controlling the operation of a work implement has been proposed (for example, see PTL 1).

### CITATION LIST

### PATENT LITERATURE

PTD 1: Japanese Patent Laying-Open No. 2018-135649

### SUMMARY OF INVENTION

### TECHNICAL PROBLEM

The above document discloses a technique for automatically driving and controlling a boom from the operator's accelerator operation and bucket operation during an excavation work. An accelerator operation by a foot of the operator and a lever operation by the right hand of the operator are required, and the operator needs to be skilled for smooth operation.

Determining a target posture that the work implement at work should assume and automatically controlling the work implement in accordance with the target posture allow further automation of work by the work machine.

Accordingly, the present disclosure relates to a system including a work machine, a computer implemented method, a method for producing a trained posture estimation model, and training data, for determining a target posture for a work implement at work to assume.

### SOLUTION TO PROBLEM

According to an aspect of the present disclosure, there is provided a system including a work machine, comprising: a body of the work machine; a work implement attached to the body of the work machine; and a computer. The computer has a trained posture estimation model to determine a target posture for the work implement to assume at work. The computer obtains a period of time elapsing since the work implement started to work, and mechanical data for operation of the body of the work machine and the work implement, uses the trained posture estimation model to estimate a target posture from the elapsed period of time and the mechanical data, and outputs the estimated target posture.

According to an aspect of the present disclosure, a computer-implemented method is provided. The method comprises the following steps. A first step is to obtain a period of time elapsing since a work implement attached to a body of a work machine started to work, and mechanical data for operation of the body of the work machine and the work implement. A second step is to, using a trained posture estimation model for determining a target posture for the work implement to assume at work, estimate a target posture from the elapsed period of time and the mechanical data to obtain an estimated target posture.

According to an aspect of the present disclosure, a method for producing a trained posture estimation model is provided. The method comprises the following steps. A first step is to obtain training data including: a period of time elapsing since a work implement attached to a body of a work machine started to work; mechanical data for operation of the body of the work machine and the work implement; and posture data of the work implement at work. A second step is to train the posture estimation model using the training data.

According to an aspect of the present disclosure, there is provided training data used to train a posture estimation model used to determine a target posture for a work implement attached to a body of a work machine to assume at work. The training data includes a period of time elapsing since the work implement started to work, mechanical data for operation of the body of the work machine and the work implement at a point in time when the elapsed period of time is measured, and posture data indicating a posture assumed by the work implement at the point in time when the elapsed period of time is measured.

According to an aspect of the present disclosure, a method for producing a trained posture estimation model is provided. The method comprises the following steps. A first step is to obtain a period of time elapsing since a work implement attached to a body of a work machine started to work, and mechanical data for operation of the body of the work machine and the work implement. A second step is to use a trained first posture estimation model to estimate a target posture for the work implement to assume at work from the elapsed period of time and the mechanical data to thus determine an estimated target posture. A third step is to train a second posture estimation model using training data including the elapsed period of time and the mechanical data as well as the estimated target posture.

### ADVANTAGEOUS EFFECTS OF INVENTION

According to the present disclosure, a target posture for a work implement at work can be obtained accurately.

### BRIEF DESCRIPTION OF DRAWINGS

Fig. 1 is a side view of a wheel loader as an example of a work machine according to an embodiment.
Fig. 2 is a schematic block diagram showing a configuration of the wheel loader according to the embodiment.
Fig. 3 illustrates an excavation work performed by the wheel loader according to the embodiment.
Fig. 4 is a schematic diagram showing a configuration of a computer included in a system including the work machine.
Fig. 5 is a block diagram showing a system configuration of the wheel loader before shipment.
Fig. 6 is a flowchart of a method for producing a trained target posture estimation model.
Fig. 7 is a schematic diagram showing a process for training a target posture estimation model.
Fig. 8 is a block diagram showing a system configuration of the wheel loader when it is shipped from a factory.
Fig. 9 is a flowchart of a process performed by the computer to estimate a target posture for a work implement after shipment from a factory.
Fig. 10 is a schematic diagram showing a process for obtaining an estimated target posture through a trained target posture estimation model.
Fig. 11 is a schematic diagram showing a modified example for training a target posture estimation model.
Fig. 12 is a flowchart of a process for generating a distillation model.

### DESCRIPTION OF EMBODIMENTS

Hereinafter, an embodiment will be described with reference to the drawings. In the following description, identical components are identically denoted. Their names and functions are also identical. Accordingly, they will not be described repeatedly in detail.

### <General Configuration>

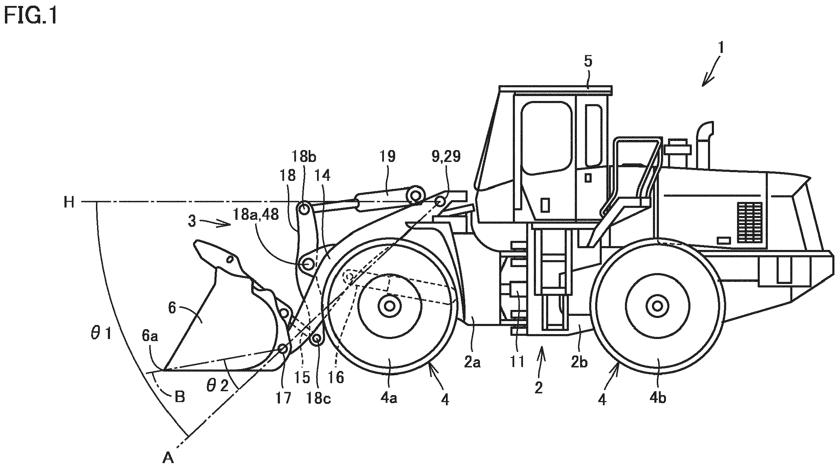

In an embodiment, as one example of a work machine, a wheel loader 1 will be described. Fig. 1 is a side view of wheel loader 1 as an example of the work machine according to the embodiment.

As shown in Fig. 1, wheel loader 1 comprises a vehicular body frame 2, a work implement 3, a traveling apparatus 4, and a cab 5. Vehicular body frame 2, cab 5 and the like configure the vehicular body of wheel loader 1. Work implement 3 and traveling apparatus 4 are attached to the vehicular body of wheel loader 1.

Traveling apparatus 4 is for causing the vehicular body of wheel loader 1 to travel, and includes traveling wheels 4a and 4b. When traveling wheels 4a and 4b are rotationally driven, wheel loader 1 can travel by itself, and perform a desired work using work implement 3.

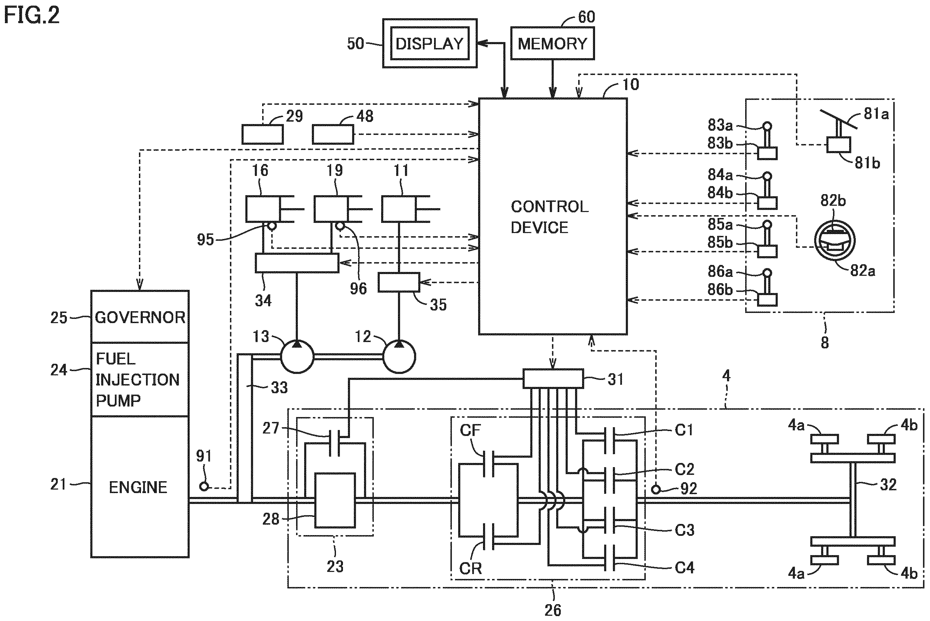

Vehicular body frame 2 includes a front frame 2a and a rear frame 2b. Front frame 2a and rear frame 2b are attached to be capable of mutually swinging rightward and leftward. A pair of steering cylinders 11 is attached across front frame 2a and rear frame 2b. Steering cylinder 11 is a hydraulic cylinder. Steering cylinder 11 is extended and retracted by hydraulic oil received from a steering pump 12 (see Fig. 2) to change rightward and leftward a direction in which wheel loader 1 travels.

In the present specification, a direction in which wheel loader 1 travels straight forward/backward is referred to as a forward/backward direction of wheel loader 1. In the forward/backward direction of wheel loader 1, a side on which work implement 3 is located with respect to vehicular body frame 2 is defined as a forward direction, and a side opposite to the forward direction is defined as a backward direction. A rightward/leftward direction of wheel loader 1 is a direction orthogonal to the forward/backward direction in a plan view. When looking in the forward direction, a right side and a left side in the rightward/leftward direction are a rightward direction and a rightward direction, respectively. An upward/downward direction of wheel loader 1 is a direction orthogonal to a plane defined by the forward/backward direction and the rightward/leftward direction. In the upward/downward direction, a side on which the ground is present is a downward side, and a side on which the sky is present is an upward side.

Work implement 3 and a pair of traveling wheels (front wheels) 4a are attached to front frame 2a. Work implement 3 is disposed in front of the vehicular body. Work implement 3 is driven by hydraulic oil received from a work implement pump 13 (see Fig. 2). Work implement pump 13 is a hydraulic pump that is driven by an engine 21 and pumps out hydraulic oil to operate work implement 3. Work implement 3 includes a boom 14, and a bucket 6 serving as a work tool. Bucket 6 is disposed at a distal end of work implement 3. Bucket 6 is an example of an attachment detachably attached to a distal end of boom 14. Depending on the type of work, the attachment is replaced by a grapple, a fork, a plow, or the like.

Boom 14 has a proximal end portion rotatably attached to front frame 2a by a boom pin 9. Bucket 6 is rotatably attached to boom 14 by a bucket pin 17 located at the distal end of boom 14.

Front frame 2a and boom 14 are coupled by a pair of boom cylinders 16. Boom cylinder 16 is a hydraulic cylinder. Boom cylinder 16 has a proximal end attached to front frame 2a. Boom cylinder 16 has a distal end attached to boom 14. Boom 14 is moved up and down when boom cylinder 16 is extended and retracted by hydraulic oil received from work implement pump 13 (see Fig. 2). Boom cylinder 16 drives boom 14 to pivot up and down about boom pin 9.

Work implement 3 further includes a bell crank 18, a bucket cylinder 19, and a link 15. Bell crank 18 is rotatably supported by boom 14 via a support pin 18a located substantially at the center of boom 14. Bucket cylinder 19 couples bell crank 18 and front frame 2a together. Link 15 is coupled to a coupling pin 18c provided at a distal end portion of bell crank 18. Link 15 couples bell crank 18 and bucket 6 together.

Bucket cylinder 19 is a hydraulic cylinder and work tool cylinder. Bucket cylinder 19 has a proximal end attached to front frame 2a. Bucket cylinder 19 has a distal end attached to a coupling pin 18b provided at a proximal end portion of bell crank 18. When bucket cylinder 19 is extended and retracted by hydraulic oil received from work implement pump 13 (see Fig. 2), bucket 6 pivots up and down. Bucket cylinder 19 drives bucket 6 to pivot about bucket pin 17.

Cab 5 and a pair of traveling wheels (rear wheels) 4b are attached to rear frame 2b. Cab 5 is disposed behind boom 14. Cab 5 is mounted on vehicular body frame 2. In cab 5, a seat seated by an operator, an operation device 8 described hereinafter, and the like are disposed.

### <System Configuration>

Fig. 2 is a schematic block diagram showing a configuration of wheel loader 1 according to the embodiment. As shown in Fig. 2, wheel loader 1 includes engine 21 as a driving source, traveling apparatus 4, work implement pump 13, steering pump 12, operation device 8, a control device 10, a display 50, and the like.

Engine 21 is for example a diesel engine. As the driving source, engine 21 may be replaced with a motor driven by a power storage unit, or the engine and the motor may both be used. Engine 21 includes a fuel injection pump 24. Fuel injection pump 24 is provided with an electronic governor 25. Output of engine 21 is controlled by adjusting the amount of fuel injected into the cylinder. This adjustment is performed by controlling electronic governor 25 by control device 10.

Engine speed is sensed by an engine speed sensor 91. Engine speed sensor 91 outputs a detection signal which is in turn input to control device 10.

Traveling apparatus 4 is an apparatus receiving a driving force from engine 21 to thereby cause wheel loader 1 to travel. Traveling apparatus 4 has a torque converter device 23, a transmission 26, front and rear wheels 4a and 4b described above, and the like.

Torque converter device 23 has a lock-up clutch 27 and a torque converter 28. Lock-up clutch 27 is a hydraulically operated clutch. Lock-up clutch 27 receives hydraulic oil, which is controlled by control device 10 via a clutch control valve 31. Thus, lock-up clutch 27 can be switched between an engaged state and a disengaged state. When lock-up clutch 27 is disengaged, torque converter 28 transmits driving force from engine 21 using oil as a medium. When lock-up clutch 27 is engaged, torque converter 28 has its input and output sides directly interconnected.

Transmission 26 has a forward clutch CF corresponding to a forward traveling gear and a reverse clutch CR corresponding to a reverse traveling gear. When clutches CF and CR are each switched between an engaged state and a disengaged state, the vehicle is switched between traveling forward and traveling backward. When clutches CF and CR are both disengaged, the vehicle enters a neutral state.

Transmission 26 has a plurality of gear shifting clutches C1 to C4 corresponding to a plurality of gears, and can switch a deceleration ratio to a plurality of stages. Each gear shifting clutch C1-C4 is a hydraulically operated hydraulic clutch. Hydraulic oil is supplied from a hydraulic pump (not shown) to clutches C1 to C4 via clutch control valve 31. When clutch control valve 31 is controlled by control device 10 to control hydraulic oil supplied to clutches C1-C4, clutches C1-C4 are switched between engagement and disengagement.

Transmission 26 has an output shaft provided with a rotation speed sensor 92 for T/M output. Rotation speed sensor 92 for T/M output detects the rotational speed of the output shaft of transmission 26. Rotation speed sensor 92 for T/M output outputs a detection signal which is in turn input to control device 10. Control device 10 calculates vehicular speed based on the detection signal of rotation speed sensor 92 for T/M output.

Transmission 26 outputs driving force which is in turn transmitted to wheels 4a and 4b via a shaft 32 and the like. Thus, wheel loader 1 travels. A part of the driving force from engine 21 is transmitted to traveling apparatus 4, and wheel loader 1 travels.

A part of the driving force of engine 21 is transmitted to work implement pump 13 and steering pump 12 via a PTO (Power Take Off) shaft 33. Work implement pump 13 and steering pump 12 are hydraulic pumps driven by a driving force output from engine 21. Work implement pump 13 pumps out hydraulic oil which is in turn supplied to boom cylinder 16 and bucket cylinder 19 via a work implement control valve 34. Steering pump 12 pumps out hydraulic oil which is in turn supplied to steering cylinder 11 via a steering control valve 35. Work implement 3 is driven by a part of the driving force output from engine 21.

A first hydraulic pressure detector 95 is attached to boom cylinder 16. First hydraulic pressure detector 95 detects pressure of hydraulic oil inside an oil chamber of boom cylinder 16. First hydraulic pressure detector 95 outputs a detection signal which is in turn input to control device 10.

A second hydraulic pressure detector 96 is attached to bucket cylinder 19. Second hydraulic pressure detector 96 detects pressure of hydraulic oil inside an oil chamber of bucket cylinder 19. Second hydraulic pressure detector 96 outputs a detection signal which is in turn input to control device 10.

A first angle detector 29 is, for example, a potentiometer attached to boom pin 9. First angle detector 29 detects a boom angle representing an angle by which boom 14 is lifted up (or tilted) with respect to the vehicular body. First angle detector 29 outputs a detection signal indicating the boom angle to control device 10.

Specifically, as shown in Fig. 1, a boom reference line A is a straight line passing through the center of boom pin 9 and the center of bucket pin 17. A boom angle θ1 is an angle formed by a horizontal line H extending forward from the center of boom pin 9 and boom reference line A. A case where boom reference line A is horizontal is defined as a boom angle θ1 = 0°. When boom reference line A is above horizontal line H, boom angle θ1 is positive. When boom reference line A is below horizontal line H, boom angle θ1 is negative.

First angle detector 29 may be a stroke sensor disposed on boom cylinder 16.

A second angle detector 48 is, for example, a potentiometer attached to support pin 18a. Second angle detector 48 detects a bucket angle representing an angle by which bucket 6 is tilted with respect to boom 14. Second angle detector 48 outputs a detection signal indicating the bucket angle to control device 10.

Specifically, as shown in Fig. 1, bucket reference line B is a straight line passing through the center of bucket pin 17 and blade edge 6a of bucket 6. Bucket angle θ2 is an angle formed by boom reference line A and bucket reference line B. A case where while bucket 6 is in contact with the ground and also has blade edge 6a horizontally on the ground is defined as a bucket angle θ2 = 0°. When bucket 6 is moved in a direction for excavation (or upward), bucket angle θ2 is positive. When bucket 6 is moved in a direction for dumping (or downward), bucket angle θ2 is negative.

Second angle detector 48 may detect bucket angle θ2 by detecting an angle of bell crank 18 with respect to boom 14 (hereinafter referred to as a bell crank angle). A bell crank angle is an angle formed by a straight line passing through the center of support pin 18a and the center of coupling pin 18b, and boom reference line A. Second angle detector 48 may be a potentiometer or a proximity switch attached to bucket pin 17. Alternatively, second angle detector 48 may be a stroke sensor disposed on bucket cylinder 19.

Operation device 8 is operated by an operator. Operation device 8 includes an accelerator operating member 81a, an accelerator operation detection unit 81b, a steering member 82a, a steering operation detection unit 82b, a boom operating member 83a, a boom operation detection unit 83b, a bucket operating member 84a, a bucket operation detection unit 84b, a gear shifting member 85a, a gear-shifting operation detection unit 85b, an FR operating member 86a, an FR operation detection unit 86b, and the like.

Accelerator operating member 81a is operated to set a target engine speed for engine 21. Accelerator operating member 81a is, for example, an accelerator pedal. When accelerator operating member 81a is operated in an increased amount (for an accelerator pedal, when it is depressed in an increased amount), the vehicular body is accelerated. When accelerator operating member 81a is operated in a decreased amount the vehicular body is decelerated. Accelerator operation detection unit 81b detects an amount by which accelerator operating member 81a is operated. An amount by which accelerator operating member 81a is operated will be referred to as an amount of operation of the accelerator. Accelerator operation detection unit 81b detects the amount of operation of the accelerator. Accelerator operation detection unit 81b outputs a detection signal to control device 10.

Steering member 82a is operated to control in which direction the vehicle moves. Steering member 82a is, for example, a steering handle. Steering operation detection unit 82b detects a position of steering member 82a and outputs a detection signal to control device 10. Control device 10 controls steering control valve 35 based on the detection signal output from steering operation detection unit 82b. Steering cylinder 11 extends and retracts to change a direction in which the vehicle travels.

Boom operating member 83a is operated to operate boom 14. Boom operating member 83a is, for example, a control lever. Boom operation detection unit 83b detects a position of boom operating member 83a. Boom operation detection unit 83b outputs a detection signal to control device 10. Control device 10 controls work implement control valve 34 based on the detection signal received from boom operation detection unit 83b. Boom cylinder 16 extends and retracts to operate boom 14.

Bucket operating member 84a is operated to operate bucket 6. Bucket operating member 84a is, for example, a control lever. Bucket operation detection unit 84b detects a position of bucket operating member 84a. Bucket operation detection unit 84b outputs a detection signal to control device 10. Control device 10 controls work implement control valve 34 based on the detection signal received from bucket operation detection unit 84b. Bucket cylinder 19 extends and retracts to operate bucket 6.

Gear shifting member 85a is operated to shift gears of transmission 26. Gear shifting member 85a is, for example, a shift lever. Gear-shifting operation detection unit 85b detects a position of gear shifting member 85a. Gear-shifting operation detection unit 85b outputs a detection signal to control device 10. Control device 10 controls gear-shifting of transmission 26 based on the detection signal received from gear-shifting operation detection unit 85b.

FR operating member 86a is operated to switch the vehicle between traveling forward and traveling backward. FR operating member 86a is switched to each of a forward position, a neutral position, and a reverse position. FR operation detection unit 86b detects a position of FR operating member 86a. FR operation detection unit 86b outputs a detection signal to control device 10. Control device 10 controls clutch control valve 31 based on the detection signal received from FR operation detection unit 86b. Forward clutch CF and reverse clutch CR are controlled, and the vehicle is switched between a forward traveling state, a reverse traveling state, and a neutral state.

Display 50 receives a command signal from control device 10 and displays various types of information. Various types of information displayed on display 50 may for example be information for a work performed by wheel loader 1, vehicular body information such as a remaining amount of fuel, coolant's temperature and hydraulic oil's temperature, an image of an environment of wheel loader 1, and the like. Display 50 may be a touch panel, and in that case, a signal generated when the operator touches a portion of display 50 is output from display 50 to control device 10.

Control device 10 is generally implemented by reading various programs by a CPU (Central Processing Unit). Control device 10 is connected to a memory 60. Memory 60 functions as a work memory and stores various programs for implementing a function of the wheel loader.

Control device 10 sends an engine command signal to electronic governor 25 so that a target rotational speed corresponding to an amount of operation of accelerator operating member 81a is obtained. Based on an amount of fuel supplied to engine 21 that varies as controlled by electronic governor 25, control device 10 can calculate fuel consumption per unit running time of engine 21, fuel consumption per unit traveling distance of wheel loader 1, and fuel consumption per unit loaded weight in bucket 6.

Control device 10 calculates a vehicular speed of wheel loader 1 based on the detection signal of rotation speed sensor 92 for T/M output. Control device 10 reads from memory 60 a map defining a relationship between wheel loader 1's vehicular speed and traction, and calculates traction based on the map.

Control device 10 receives a detection signal of engine speed from engine speed sensor 91. Control device 10 reads from memory 60 a map defining a relationship between engine speed and engine torque, and calculates engine torque based on the map.

Traction and engine torque may be calculated in a different manner than reference to a map. For example, traction and engine torque may be calculated by referring to a table, or calculation using a mathematical expression, or the like.

Control device 10 automatically controls operation of boom 14 and bucket 6. This automatic control will more specifically be described hereinafter.

### <Excavation Work>

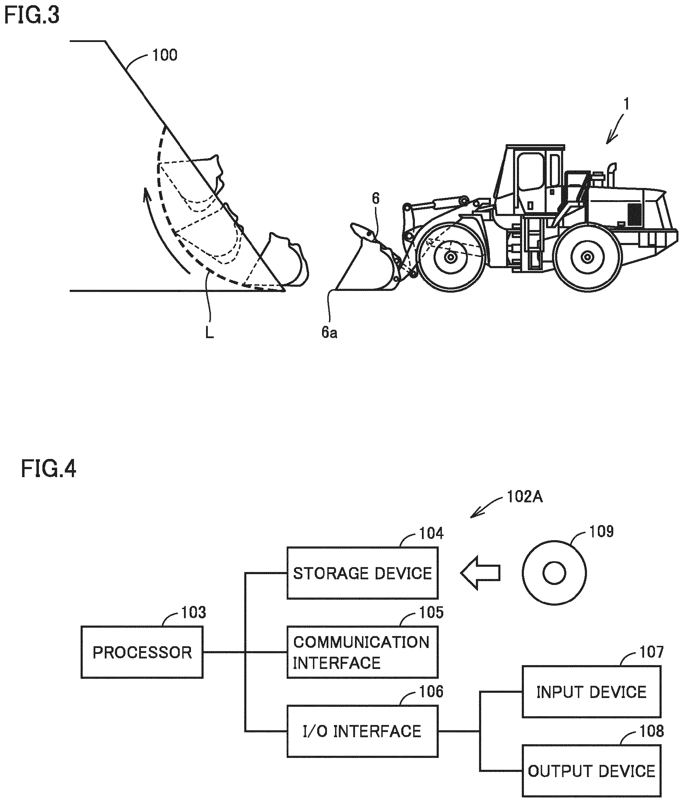

Wheel loader 1 of the present embodiment performs excavation work for scooping a target to be excavated, such as soil and sand. Fig. 3 illustrates an excavation work performed by wheel loader 1 according to the embodiment.

As shown in Fig. 3, wheel loader 1 causes blade edge 6a of bucket 6 to bite into a target to be excavated 100, and subsequently raises bucket 6 along the bucket's locus L as indicated in Fig. 3 by a curved arrow. Thus, an excavation work for scooping target to be excavated 100 is performed.

Wheel loader 1 of the present embodiment performs an excavating operation to cause bucket 6 to scoop target to be excavated 100, and a loading operation to load a load (or target to be excavated 100) in bucket 6 onto a carrier such as a dump truck.

More specifically, wheel loader 1 performs a plurality of work steps, which will be described hereinafter, sequentially to excavate target to be excavated 100 and load target to be excavated 100 onto a carrier such as a dump truck.

A first step is to move forward toward target to be excavated 100 (hereinafter also referred to as the step of moving forward without any load). A second step is to move wheel loader 1 forward until blade edge 6a of bucket 6 bites into target to be excavated 100 (hereinafter also referred to as the excavating (plowing) step). A third step is to operate boom cylinder 16 to raise bucket 6 and also operate bucket cylinder 19 to tilt bucket 6 back (hereinafter also referred to as the excavating (scooping) step). A fourth step is to move wheel loader 1 backward after target to be excavated 100 is scooped into bucket 6 (hereinafter also referred to as the step of moving backward with a load).

A fifth step is to move wheel loader 1 forward to approach the dump truck while keeping bucket 6 raised or raising bucket 6 (hereinafter also referred to as the step of moving forward with a load). A sixth step is to dump bucket 6 at a predetermined position to load target to be excavated 100 onto the loading platform of the dump truck (hereinafter also referred to as the soil dumping step). A seventh step is to lower boom 14 while moving wheel loader 1 backward to return bucket 6 to an excavating position (hereinafter also referred to the step of moving backward and lowering the boom). The above is a typical work steps configuring one cycle of an excavating and loading process.

### <Detailed Configuration of Computer 102A>

Fig. 4 is a schematic diagram showing a configuration of a computer 102A included in a system including the work machine. The system according to the embodiment is a system for determining a target value for an angle of boom 14 with respect to the body of the work machine (the vehicular body described with reference to Fig. 1) (i.e., boom angle θ1, see Fig. 1) and an angle of bucket 6 with respect to boom 14 (i.e., bucket angle θ2, see Fig. 1) while the work machine is at work, typically while wheel loader 1 is performing an excavation work. Computer 102A shown in Fig. 4 is a part of the configuration of control device 10 shown in Fig. 2. Computer 102A may be designed exclusively for the system according to the embodiment, or may be a general-purpose personal computer (PC).

Computer 102A includes a processor 103, a storage device 104, a communication interface 105, and an I/O interface 106. Processor 103 is for example a CPU.

Storage device 104 includes a medium which stores information such as stored programs and data so as to be readable by processor 103. Storage device 104 includes a RAM (Random Access Memory), or a ROM (Read Only Memory) or a similar system memory, and an auxiliary storage device. The auxiliary storage device may for example be a magnetic recording medium such as a hard disk, an optical recording medium such as a CD (Compact Disc) or a DVD (Digital Versatile Disc), or a semiconductor memory such as a flash memory. Storage device 104 may be built into computer 102A. Storage device 104 may include an external recording medium 109 detachably connected to computer 102A. External recording medium 109 may be a CD-ROM.

Communication interface 105 is, for example, a wired LAN (Local Area Network) module, or a wireless LAN module, and is an interface for performing communications via a communication network. I/O interface 106 is, for example, a USB (Universal Serial Bus) port, and is an interface for connecting to an external device.

Computer 102A is connected to an input device 107 and an output device 108 via I/O interface 106. Input device 107 is a device used by a user for input to computer 102A. Input device 107 includes, for example, a mouse, or a trackball or a similar pointing device. Input device 107 may include a device such as a keyboard for inputting text. Output device 108 includes, for example, a display (display 50, see Fig. 2).

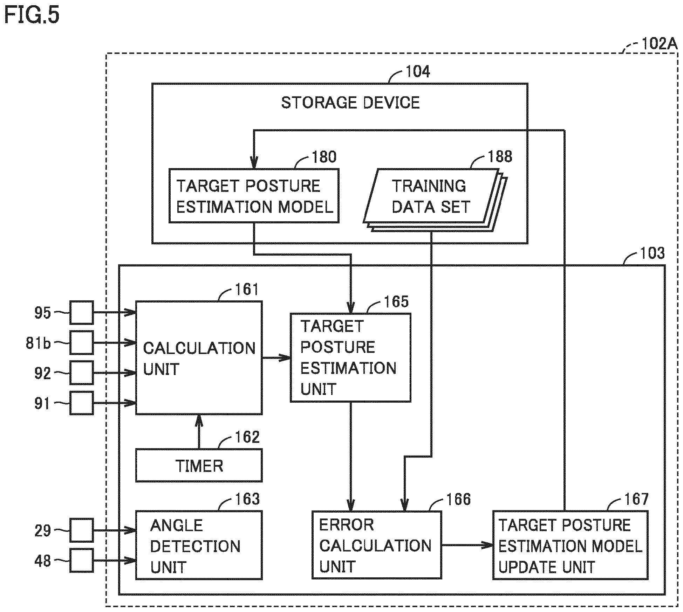

Fig. 5 is a block diagram showing a system configuration of wheel loader 1 before shipment. Processor 103 and storage device 104 shown in Fig. 5 constitute a part of the configuration of computer 102A shown in Fig. 4. Processor 103 includes a calculation unit 161.

Calculation unit 161 receives from first hydraulic pressure detector 95 a detection signal indicative of pressure of hydraulic oil internal to an oil chamber of boom cylinder 16 as detected. Calculation unit 161 receives from accelerator operation detection unit 81b a detection signal indicative of the amount of operation of the accelerator as detected. Calculation unit 161 receives from rotation speed sensor 92 for T/M output a detection signal indicative of rotational speed of the output shaft of transmission 26 as detected. Calculation unit 161 calculates vehicular speed of wheel loader 1 based on the detection signal of rotation speed sensor 92 for T/M output.

Calculation unit 161 receives from engine speed sensor 91 a detection signal indicative of engine speed as detected. Calculation unit 161 calculates an amount of fuel supplied to engine 21, based on the amount of operation of the accelerator, calculates an amount of target to be excavated 100 such as soil loaded into bucket 6, based on the hydraulic pressure in the oil chamber of boom cylinder 16, and furthermore, calculates an amount of the target to be excavated loaded per amount of fuel supplied (i.e., a fuel consumption rate).

Calculation unit 161 refers to a map that defines a relationship between wheel loader 1's vehicular speed and traction to calculate traction based on wheel loader 1's vehicular speed. Calculation unit 161 refers to a map that defines a relationship between engine speed and engine torque to calculate engine torque based on engine speed.

Boom cylinder 16's hydraulic pressure, an amount of operation of the accelerator, vehicular speed, engine speed, a fuel consumption rate, traction, and engine torque are included in mechanical data for operation of the body of the work machine (or the vehicular body) and work implement 3. The mechanical data includes data for traveling of the work vehicular body, such as an amount of operation of the accelerator, vehicular speed, engine speed, traction, and engine torque.

Processor 103 has a timer 162. Calculation unit 161 reads the current time from timer 162, and calculates a period of time elapsing while wheel loader 1 is performing an excavation work since wheel loader 1 started to perform the excavation work.

The excavation work having been started, that is, wheel loader 1 having transitioned in a work process from the step of moving forward without any load to the excavating (plowing) step, is determined by detecting that the hydraulic pressure in the oil chamber of boom cylinder 16 increases when blade edge 6a of bucket 6 plows into target to be excavated 100 and the load of target to be excavated 100 starts to act on bucket 6, and confirming through boom angle θ1 and bucket angle θ2 whether work implement 3 is in a posture to start the excavation work. A point in time when the work starts may be determined based on a load received by boom cylinder 16 in the work. When the work starts may be determined based on data of an image of an environment surrounding wheel loader 1, as captured by an imaging device.

The excavation work having ended, that is, wheel loader 1 having transitioned in the work process from the excavating (scooping) step to the step of moving backward with a load, is determined by detecting that a direction in which wheel loader 1 travels is changed from a forward direction to a backward direction and that bucket 6 having been tilted back to scoop target to be excavated 100 now assumes a neutral operation.

Processor 103 includes an angle detection unit 163. Angle detection unit 163 receives from first angle detector 29 a detection signal indicative of boom angle θ1 as detected. Angle detection unit 163 receives from second angle detector 48 a detection signal indicative of bucket angle θ2 as detected.

Boom angle θ1 and bucket angle θ2 detected at a point in time during an excavation work are assigned to a period of time elapsing at the point in time since the excavation work was started, and mechanical data obtained at the point in time, and are stored to storage device 104 as training data. Storage device 104 stores a training data set 188 for training a target posture estimation model 180. Training data set 188 includes a plurality of training data each labelling a posture assumed by work implement 3 (or boom angle θ1 and bucket angle θ2) at a point in time during an excavation work with respect to a period of time elapsing since the excavation work was started and mechanical data at the point in time.

Processor 103 includes a target posture estimation unit 165. Storage device 104 has target posture estimation model 180 stored therein.

Target posture estimation model 180 is an artificial intelligence model for determining a target posture for work implement 3 to assume during an excavation work. Target posture estimation model 180 is configured to determine a target posture for work implement 3 to assume during an excavation work from a period of time elapsing since the excavation work was started and mechanical data. Computer 102A uses target posture estimation model 180 of artificial intelligence to estimate a target posture for work implement 3 to assume during an excavation work. Target posture estimation unit 165 uses target posture estimation model 180 to estimate a target posture for work implement 3 from an elapsed period of time and mechanical data to obtain an estimated target posture.

More specifically, target posture estimation unit 165 reads target posture estimation model 180 from storage device 104 and inputs a period of time elapsing since an excavation work was started and mechanical data, as calculated by calculation unit 161, to target posture estimation model 180 to obtain an output of a result of an estimation of boom angle θ1 and bucket angle θ2 to be a target.

Target posture estimation model 180 includes a neural network. Target posture estimation model 180 includes, for example, a deep neural network such as a convolutional neural network (CNN).

The model in the embodiment may be implemented in hardware, software executable on hardware, firmware, or a combination thereof. The model may include programs, algorithms, and data executed by processor 103. The model may have functionality performed by a single module or across multiple modules in a distributed manner. The model may be distributed across a plurality of computers.

Processor 103 includes an error calculation unit 166 and a target posture estimation model update unit 167.

Error calculation unit 166 selects training data corresponding to the elapsed period of time and mechanical data calculated by calculation unit 161. Error calculation unit 166 compares a result of an estimation of boom angle θ1 and bucket angle θ2 by target posture estimation unit 165 with boom angle θ1 and bucket angle θ2 included in the selected training data. Error calculation unit 166 calculates an error of the result of the estimation of boom angle θ1 and bucket angle θ2 by target posture estimation unit 165 with respect to the values of boom angle θ1 and bucket angle θ2 included in the training data.

Target posture estimation model update unit 167 updates target posture estimation model 180 based on the error of boom angle θ1 and bucket angle θ2 calculated by error calculation unit 166. In this way, target posture estimation model 180 is trained. Target posture estimation model 180 is trained in a factory before shipment of wheel loader 1.

### <Method for producing target posture estimation model 180 trained>

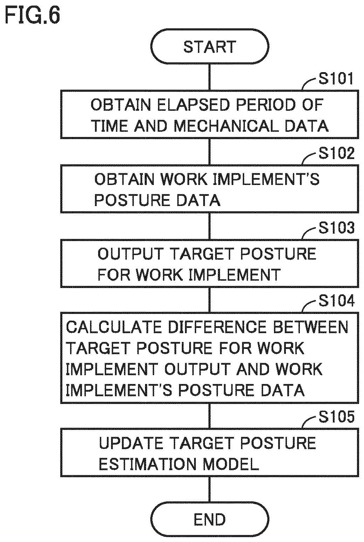

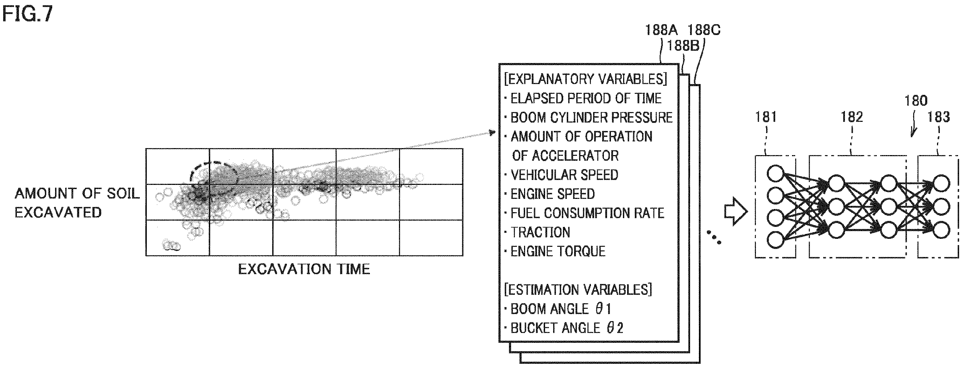

Fig. 6 is a flowchart of a method for producing target posture estimation model 180 trained. Fig. 7 is a schematic diagram showing a process for training target posture estimation model 180. Although there is some overlapping with what is described with reference to Fig. 5, a process for training target posture estimation model 180 for estimating a target posture for work implement 3 to assume during an excavation work will now be described below with reference to Figs. 6 and 7.

As shown in Fig. 6, initially, in step S101, an elapsed period of time and mechanical data are obtained. In step S102, the work implement's posture data is obtained.

Computer 102A, more specifically, calculation unit 161 calculates a period of time elapsing at a point in time during an excavation work since the excavation work was started. Calculation unit 161 calculates mechanical data at the point in time, based on results of detection done by various sensors including first hydraulic pressure detector 95, accelerator operation detection unit 81b, rotation speed sensor 92 for T/M output, and engine speed sensor 91. Angle detection unit 163 detects boom angle θ1 and bucket angle θ2 made at the point in time, based on a result of detection done by first angle detector 29 and second angle detector 48.

As shown in Fig. 7, excavation works, desirably, several tens of thousands or more excavation works are actually performed by a plurality of operators, and from highly productive ones of the actually performed excavation works, elapsed periods of time and mechanical data (explanatory variables shown in Fig. 7) and the work implement's posture data (estimation variables shown in Fig. 7) are extracted. Training data 188A, 188B, 188C,... are created including elapsed periods of time and mechanical data as well as the work implement's posture data obtained through those actually performed excavation works which are performed in short periods of time and excavate large amounts of soil.

The training data may further include data manually input by an operator, the angle of inclination of target to be excavated 100 and the type of the target as soil, and data of an image of an environment surrounding wheel loader 1, as captured by an imaging device.

Subsequently, in step S103, a target posture for work implement 3 is output. Computer 102A, more specifically, target posture estimation unit 165 reads target posture estimation model 180 from storage device 104. Target posture estimation model 180 includes the neural network shown in Fig. 7. The neural network includes an input layer 181, an intermediate layer (or a hidden layer) 182, and an output layer 183. Intermediate layer 182 is multi-layered. Input layer 181, intermediate layer 182 and output layer 183 have one or more units (neurons). Input layer 181, intermediate layer 182 and output layer 183 can have their respective units set as appropriate in number.

Adjacent layers have their respective units connected to each other, and a weight is set for each connection. A bias is set for each unit. A threshold value is set for each unit. An output value of each unit is determined depending on whether a total sum of a product of a value input to each unit and the weight plus the bias exceeds the threshold value.

Target posture estimation model 180 is trained to determine a target posture for work implement 3 at work to assume from a period of time elapsing since an excavation work was started and mechanical data. A parameter obtained for target posture estimation model 180 through training is stored to storage device 104. The parameter for target posture estimation model 180 for example includes the number of layers of the neural network, the number of units in each layer, a relationship between units in connectivity, a weight applied to a connection between each unit and another unit, a bias associated with each unit, and a threshold value for each unit.

Target posture estimation unit 165 inputs an elapsed period of time and mechanical data calculated by calculation unit 161 to input layer 181. Output layer 183 outputs a target posture for work implement 3, more specifically, an output value indicating boom angle θ1 and bucket angle θ2. For example, computer 102A uses an elapsed period of time and mechanical data as an input to input layer 181 to compute forward propagation of the neural network of target posture estimation model 180. Thus, computer 102A obtains an estimated target posture for work implement 3 as an output value output from the neural network at output layer 183.

Step S102 may not be followed by step S103. Steps S102 and S103 may be performed simultaneously, or step S103 may be followed by step S102.

Subsequently, in step S104, a difference is calculated between the target posture for work implement 3 output in step S103 and the work implement's posture data obtained in step S102. Computer 102A, more specifically, error calculation unit 166 compares the estimated target posture of work implement 3 output from target posture estimation model 180 at output layer 183 with a posture of work implement 3 included in corresponding training data, and calculates an error of the estimated target posture with respect to the work implement's posture data.

Computer 102A trains target posture estimation model 180 using a period of time elapsing at a point in time during an excavation work since the excavation work was started and mechanical data obtained at that point in time as input data, and posture data indicating a posture assumed by work implement 3 at that point in time (i.e., boom angle θ1 and bucket angle θ2) as teacher data. From an error of an output value as calculated, computer 102A calculates through back propagation an error of a weight applied to a connection between each unit and another unit, an error of each unit's bias, and an error of the threshold value for each unit.

Subsequently, in step S105, target posture estimation model 180 is updated. Computer 102A, more specifically, target posture estimation model update unit 167 updates parameters of target posture estimation model 180, such as a weight applied to a connection between each unit and another unit, each unit's bias and the threshold value for each unit, based on the error of the estimated target posture with respect to the posture of work implement 3 obtained in angle detection unit 163, as calculated by error calculation unit 166. And once the same elapsed period of time and mechanical data have been input to input layer 181, an output value closer to posture data indicating a posture of work implement 3 can be output. Target posture estimation model 180 has the updated parameters stored to storage device 104.

When a target posture is next time estimated for work implement 3, an elapsed period of time and mechanical data are input to the updated target posture estimation model 180 to obtain an output of an estimated target posture for work implement 3. Computer 102A repeats step S101 to step S105 until target posture estimation model 180 outputs an estimated target posture for work implement 3 that matches posture data indicating a posture that work implement 3 assumes at a point in time when the elapsed period of time and the mechanical data are obtained. In this way, target posture estimation model 180 has its parameters optimized and is thus trained.

Once target posture estimation model 180 has sufficiently been trained, and as a result comes to obtain a sufficiently accurately estimated target posture, computer 102A ends training target posture estimation model 180. Target posture estimation model 180 trained is thus produced. Then, the process ends (END).

Initial values for various parameters of target posture estimation model 180 may be provided by a template. Alternatively, the initial values of the parameters may be manually given by human input. When retraining target posture estimation model 180, computer 102A may prepare initial values for parameters, based on values stored in storage device 104 as parameters of target posture estimation model 180 to be retrained.

### <Estimating target posture for work implement 3 using target posture estimation model 180 trained>

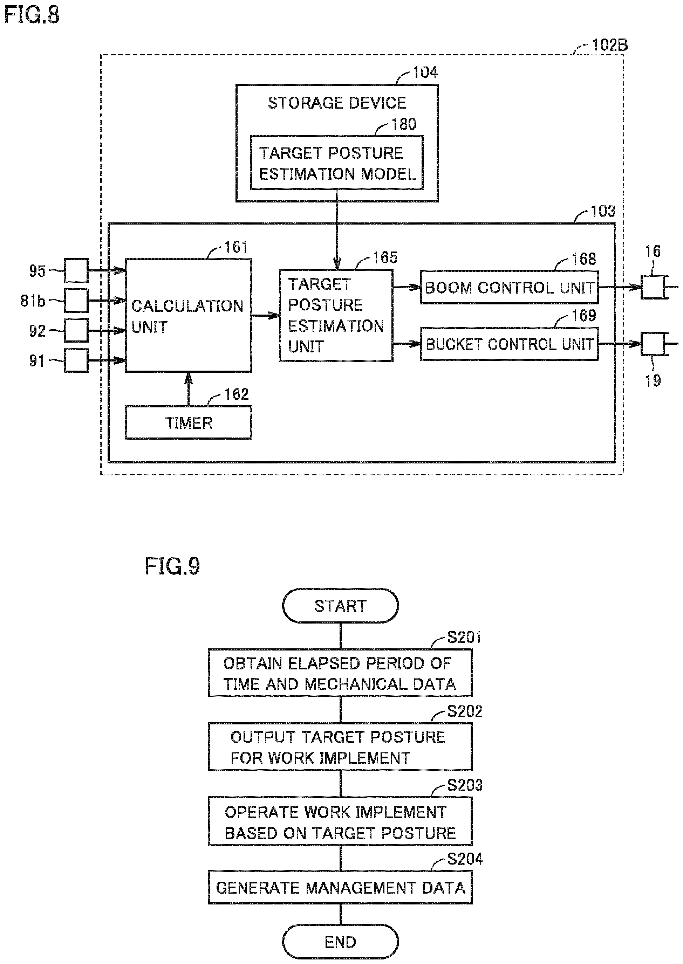

Fig. 8 is a block diagram showing a system configuration of wheel loader 1 when it is shipped from a factory. Wheel loader 1 shipped from the factory includes a computer 102B instead of computer 102A shown in Fig. 5. Computer 102B has processor 103 and storage device 104.

Processor 103 includes calculation unit 161, timer 162, and target posture estimation unit 165, as well as shown in Fig. 5. Processor 103 also includes a boom control unit 168 and a bucket control unit 169. Processor 103 does not include angle detection unit 163, error calculation unit 166, and target posture estimation model update unit 167 shown in Fig. 5. Storage device 104 has target posture estimation model 180 trained. Storage device 104 does not have training data set 188 shown in Fig. 5.

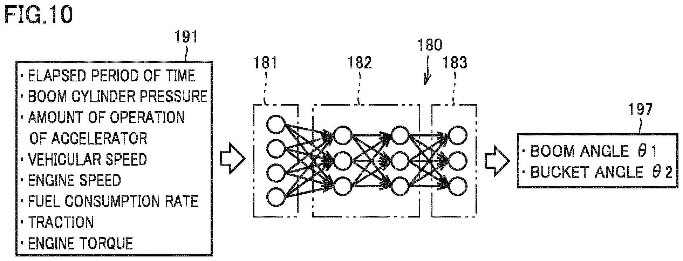

Fig. 9 is a flowchart of a process performed by computer 102B to estimate a target posture for work implement 3 after shipment from a factory. Fig. 10 is a schematic diagram showing a process of obtaining an estimated target posture using target posture estimation model 180 that has been trained to determine a target posture for work implement 3 from a period of time elapsing since an excavation work was started and mechanical data. A process for estimating after shipment from a factory a target posture for work implement 3 to assume during an excavation work will be described below with reference to Figs. 8 to 10.

Initially, in step S201, an elapsed period of time and mechanical data are obtained. Computer 102B, more specifically, calculation unit 161 calculates a period of time elapsing at a point in time during an excavation work since the excavation work was started. Calculation unit 161 calculates mechanical data for the point in time based on results of detection done by various sensors including first hydraulic pressure detector 95, accelerator operation detection unit 81b, rotation speed sensor 92 for T/M output, and engine speed sensor 91. Input data 191 shown in Fig. 10 includes an elapsed period of time and mechanical data.

Subsequently, in step S202, a target posture is estimated for work implement 3. Computer 102B, more specifically, target posture estimation unit 165 reads target posture estimation model 180 and an optimal value of a trained parameter from storage device 104 to obtain target posture estimation model 180 trained. Target posture estimation unit 165 uses the elapsed period of time and mechanical data calculated by calculation unit 161 as data 191 input to target posture estimation model 180. Target posture estimation unit 165 inputs the elapsed period of time and the mechanical data to each unit included in input layer 181 of target posture estimation model 180 trained. Target posture estimation model 180 trained outputs at output layer 183 an estimated target posture which is an estimation of a target posture for work implement 3 to assume during an excavation work, more specifically, an angular output value 197 including boom angle θ1 and bucket angle θ2 (see Fig. 10).

Subsequently, in step S203, computer 102B operates work implement 3 based on the estimated target posture.

Target posture estimation unit 165 outputs to boom control unit 168 boom angle θ1 targeted. Boom control unit 168 outputs a control signal to boom cylinder 16 based on boom angle θ1 targeted. In response to the control signal, boom cylinder 16 extends or retracts to perform automatic control to operate boom 14 so that an actual value of boom angle θ1 approaches a target value.

Bucket angle θ2 targeted is output from target posture estimation unit 165 to bucket control unit 169. Bucket control unit 169 outputs a control signal to bucket cylinder 19 based on bucket angle θ2 targeted. In response to the control signal, bucket cylinder 19 extends or retracts to perform automatic control to operate bucket 6 so that an actual value of bucket angle θ2 approaches a target value.

Finally, in step S204, computer 102B generates management data including a posture of work implement 3. Computer 102B stores the management data to storage device 104. Then, the process ends (END).

Thus, in the system according to the embodiment, computer 102B includes target posture estimation model 180 that has been trained for determining a target posture for work implement 3 to assume during an excavation work. As shown in Figs. 8 to 10, computer 102B is programmed to obtain a period of time elapsing since the excavation work was started and mechanical data at a point in time during an excavation work, and uses target posture estimation model 180 trained to estimate a target posture for work implement 3 from the elapsed period of time and the mechanical data to thus determine an estimated target posture.

Target posture estimation model 180 of artificial intelligence suitable for estimating a target posture for work implement 3 can thus be used to estimate a target posture for work implement 3 to assume during an excavation work. Computer 102B can thus easily and accurately obtain a target posture for work implement 3 using artificial intelligence.

As shown in Fig. 5, computer 102A is programmed to update target posture estimation model 180 based on an error between an estimated target posture which is an estimation of a target posture for work implement 3 from a period of time elapsing since an excavation work was started and mechanical data through target posture estimation model 180 and a target posture included in training data for work implement 3 at work. Thus, target posture estimation model 180 can sufficiently be trained before shipment from a factory to be target posture estimation model 180 of high accuracy.

Wheel loader 1 after shipment from the factory may include first angle detector 29, second angle detector 48, and angle detection unit 163. In this case, target posture estimation model 180 may be additionally trained after shipment from the factory.

As shown in Fig. 1, wheel loader 1 may include boom 14 coupled to front frame 2a and bucket 6 coupled to boom 14. Using target posture estimation model 180 trained, target values for boom angle θ1 and bucket angle θ2 can be estimated from a period of time elapsing since an excavation work was started and mechanical data.

### <A modified example for training target posture estimation model 180>

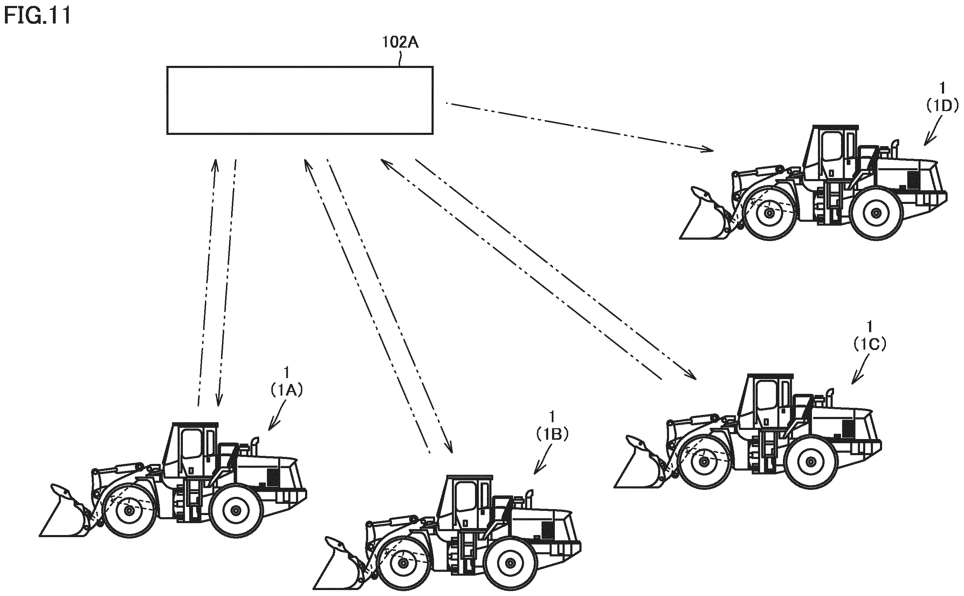

Fig. 11 is a schematic diagram showing a modified example for training target posture estimation model 180. In the description for Figs. 5 to 7, an example in which target posture estimation model 180 is trained before wheel loader 1 is shipped from a factory has been described. Training data for training target posture estimation model 180 may be collected from a plurality of wheel loaders 1.

A first wheel loader 1 (a wheel loader 1A), a second wheel loader 1 (a wheel loader 1B), a third wheel loader 1 (a wheel loader 1C), and a fourth wheel loader 1 (a wheel loader 1D) shown in Fig. 11 are of the same model. Wheel loaders 1A, 1B, 1C have been shipped from a factory and are currently each located at a work site.

Computer 102A obtains, from each of wheel loaders 1A, 1B and 1C, a period of time elapsing at a point in time during an excavation work since the excavation work was started, and mechanical data for that point in time. Computer 102A also obtains the work implement's posture data (boom angle θ1 and bucket angle θ2) at that point in time from each of wheel loaders 1A, 1B and 1C in association with the elapsed period of time and the mechanical data. Computer 102A extracts elapsed periods of time, mechanical data, and the work implement's posture data of highly productive ones of a plurality of excavation works performed by wheel loaders 1A, 1B and 1C, and collects them as training data. Using these training data, computer 102A trains target posture estimation model 180 to be able to estimate a target posture for work implement 3 from an elapsed period of time and mechanical data to thus determine an estimated target posture.

Computer 102A may obtain an elapsed period of time, mechanical data and the work implement's posture data from each of wheel loaders 1A, 1B, 1C via communication interface 105 (see Fig. 4). Alternatively, computer 102A may obtain an elapsed period of time, mechanical data and the work implement's posture data from each of wheel loaders 1A, 1B, 1C via external recording medium 109.

Computer 102A may be located at the same work site as wheel loaders 1A, 1B, 1C. Alternatively, computer 102A may be located in a remote place away from a work site, such as a management center for example. Wheel loaders 1A, 1B, 1C may be located at the same work site or at different work sites.

Target posture estimation model 180 trained is provided to each wheel loader 1A, 1B, 1C via communication interface 105, external recording medium 109, or the like. Each wheel loader 1A, 1B, 1C is thus provided with target posture estimation model 180 trained.

When target posture estimation model 180 is already stored in each wheel loader 1A, 1B, 1C, target posture estimation model 180 stored is overwritten. Target posture estimation model 180 may be overwritten periodically by periodically collecting training data and training target posture estimation model 180, as described above. Whenever target posture estimation model 180 has a parameter updated, the latest, updated value is stored to storage device 104.

Target posture estimation model 180 trained is also provided to wheel loader 1D. Target posture estimation model 180 is provided to both wheel loaders 1A, 1B, 1C that provide training data and wheel loader 1D that does not provide training data. Wheel loader 1D may be located at the same work site as any of wheel loaders 1A, 1B, 1C, or may be located at a work site different than wheel loaders 1A, 1B, 1C. Wheel loader 1D may be before shipment from a factory.

### <Method for producing distillation model>

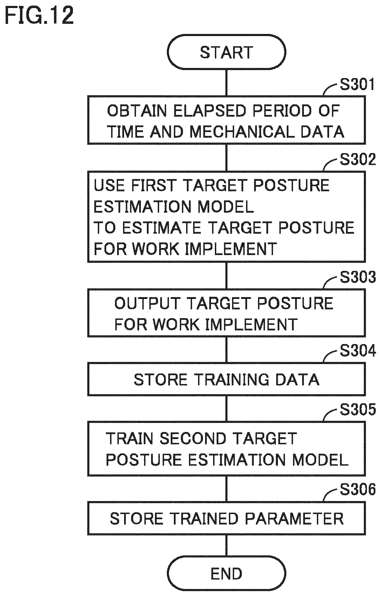

Target posture estimation model 180 described above is not limited to a model trained through machine learning using training data 188A, 188B, 188C, ..., and may be a model generated using the trained model. For example, target posture estimation model 180 may be another trained model (a distillation model) trained based on a result obtained by repeatedly inputting/outputting data to/from a trained model. Fig. 12 is a flowchart of a process for generating a distillation model.

As shown in Fig. 12, initially, in step S301, an elapsed period of time and mechanical data are obtained. Similarly as done in step S101 shown in Fig. 6, calculation unit 161 calculates a period of time elapsing at a point in time during an excavation work since the excavation work was started, and calculates mechanical data for that point in time.

Subsequently, in step S302, computer 102A uses a trained first target posture estimation model to determine an estimated target posture which is an estimation of a target posture for work implement 3 to assume during the excavation work. In step S303, computer 102A outputs the estimated target posture for work implement 3.

Computer 102A, more specifically, target posture estimation unit 165 reads the trained first target posture estimation model from storage device 104. Target posture estimation unit 165 inputs the elapsed period of time and mechanical data calculated by calculation unit 161 to input layer 181 of the trained first target posture estimation model. The trained first target posture estimation model outputs from output layer 183 a target posture for work implement 3 to assume during the excavation work, more specifically, an estimated target posture indicating boom angle θ1 and bucket angle θ2.

Subsequently, in step S304, computer 102A stores the elapsed period of time and mechanical data obtained in step S301 and the target posture output in step S303 for work implement 3 to storage device 104 as training data.

Subsequently, in step S305, computer 102A uses the training data to train a second target posture estimation model. Computer 102A inputs an elapsed period of time and mechanical data to the second target posture estimation model at an input layer. Computer 102A outputs from an output layer of the second target posture estimation model a target posture for work implement 3 to assume during an excavation work, more specifically, an output value indicating a result of estimating boom angle θ1 and bucket angle θ2. A difference is calculated between the estimated target posture of work implement 3 output from the second target posture estimation model, and the estimated target posture of work implement 3 output from the first target posture estimation model, as output in step S303. Based on this difference, computer 102A updates a parameter of the second target posture estimation model. The second target posture estimation model is thus trained.

Finally, in step S306, the second position estimation model has the updated parameter stored to storage device 104 as a trained parameter. Then, the process ends (END).

Thus, an elapsed period of time and mechanical data, and a target posture estimated for work implement 3 through a first target posture estimation model can be used as training data to train a second target posture estimation model (or a distillation model), and computer 102A can use the second target posture estimation model that is simpler than the first target posture estimation model to estimate a target posture for work implement 3 to assume during an excavation work. This can alleviate a load imposed on computer 102A for estimating a target posture for work implement 3. Computer 102A may train the second target posture estimation model by using training data generated by another computer.

In the above embodiment, target posture estimation model 180 includes a neural network. This is not exclusive, however, and target posture estimation model 180 may be a model, such as a support vector machine, a decision tree, or the like capable of accurately estimating a target posture for work implement 3 at work to assume from a period of time elapsing since a work was started and mechanical data through machine learning.

The work machine to which the idea of the present disclosure is applicable is not limited to a wheel loader, and may be a work machine having a work implement, such as a hydraulic excavator, a crawler dozer, and the like. For a hydraulic excavator, the target posture estimation model may receive mechanical data including the boom cylinder's hydraulic pressure, the dipper stick cylinder's hydraulic pressure, engine torque, engine speed, a hydraulic pump's capacity, and the like. For a hydraulic excavator, the target posture estimation model may output an estimated target posture for the work implement including an angle of the boom with respect to the vehicular body, an angle of the dipper stick with respect to the boom, and an angle of the bucket with respect to the dipper stick.

The presently disclosed embodiments are to be considered as illustrative in any respect and not restrictive. The scope of the present invention is not indicated by the above description but by the scope of the claims, and is intended to include meanings equivalent to the scope of the claims and any modifications within the scope.

### REFERENCE SIGNS LIST

1, 1A, 1B, 1C,1D wheel loader, 2 vehicular body frame, 2a front frame, 3 work implement, 4 traveling apparatus, 5 cab, 6 bucket, 6a blade edge, 8 operation device, 9 boom pin, 10 control device, 11 steering cylinder, 14 boom, 16 boom cylinder, 17 bucket pin, 18 bell crank, 18a support pin, 18b, 18c coupling pin, 19 bucket cylinder, 21 engine, 29 first angle detector, 48 second angle detector, 81a accelerator operating member, 81b accelerator operation detection unit, 82a steering member, 82b steering operation detection unit, 83a boom operating member, 83b boom operation detection unit, 84a bucket operating member, 84b bucket operation detection unit, 85a gear shifting member, 85b gear-shifting operation detection unit 86a, FR operating member, 86b FR operation detection unit, 91 engine speed sensor, 92 output rotation speed sensor, 95 first pressure detector, 96 second pressure detector, 100 target to be excavated, 102A, 102B computer, 103 processor, 104 storage device, 105 communication interface, 106 I/O Interface, 107 input device, 108 output device, 109 external recording medium, 161 calculation unit, 162 timer, 163 angle detection unit, 165 target posture estimation unit, 166 error calculation unit, 167 target posture estimation model update unit, 168 boom control unit, 169 bucket control unit, 180 target posture estimation model, 181 input layer, 182 intermediate layer, 183 output layer, 188 training data set, 188A, 188B, 188C training data, 191 input data, 197 angular output value, A boom reference line, B bucket reference line, H horizontal line, L bucket's locus.

## Claims

1. A system including a work machine, comprising:
a body of the work machine;
a work implement attached to the body of the work machine; and
a computer, wherein
the computer has a trained posture estimation model that determines a target posture for the work implement to assume at work, and
the computer obtains a period of time elapsing since the work implement started to work, and mechanical data for operation of the body of the work machine and the work implement, uses the trained posture estimation model to estimate the target posture from the elapsed period of time and the mechanical data, and thus outputs the estimated target posture.

2. The system according to claim 1, wherein the trained posture estimation model undergoes a learning process using a training data set so that when the elapsed period of time and the mechanical data are received, the trained posture estimation model outputs the estimated target posture from the elapsed period of time and the mechanical data.

3. The system according to claim 1, wherein the trained posture estimation model is generated through a learning process using a training data set including a plurality of training data each labeling posture data of the work implement with respect to the elapsed period of time and the mechanical data.

4. The system according to any one of claims 1 to 3, wherein the work implement includes a boom coupled with the body of the work machine, and an attachment coupled with the boom.

5. The system according to claim 4, wherein the estimated target posture includes an angle of the boom with respect to the body of the work machine, and an angle of the attachment with respect to the boom.

6. The system according to claim 4 or 5, wherein the attachment is a bucket.

7. The system according to any one of claims 1 to 6, wherein the mechanical data includes data for travelling of the body of the work machine.

8. A computer-implemented method comprising:
obtaining a period of time elapsing since a work implement attached to a body of a work machine started to work, and mechanical data for operation of the body of the work machine and the work implement; and
through a trained posture estimation model for determining a target posture for the work implement to assume at work, estimating the target posture from the elapsed period of time and the mechanical data to determine an estimated target posture.

9. A method for producing a trained posture estimation model, comprising:
obtaining training data including a period of time elapsing since a work implement attached to a body of a work machine started to work, mechanical data for operation of the body of the work machine and the work implement, and posture data of the work implement at work; and
training the posture estimation model using the training data.

10. The method according to claim 9, wherein the training includes:
using the posture estimation model to estimate a target posture for the work implement to assume at work from the elapsed period of time and the mechanical data to thus determine an estimated target posture;
detecting an error of the estimated target posture with respect to the posture data; and
updating the posture estimation model based on the error.

11. Training data used to train a posture estimation model used to determine a target posture for a work implement attached to a body of a work machine to assume at work, the training data comprising:
a period of time elapsing since the work implement started to work;
mechanical data for operation of the body of the work machine and the work implement at a point in time when the elapsed period of time is measured; and
posture data indicating a posture assumed by the work implement at the point in time when the elapsed period of time is measured.

12. The training data according to claim 11, wherein
the work implement includes a boom coupled with the body of the work machine, and an attachment coupled with the boom, and
the posture data includes an angle of the boom with respect to the body of the work machine, and an angle of the attachment with respect to the boom.

13. The training data according to claim 11 or 12, wherein the mechanical data includes data for travelling of the body of the work machine.

14. A method for producing a trained posture estimation model, comprising:
obtaining a period of time elapsing since a work implement attached to a body of a work machine started to work, and mechanical data for operation of the body of the work machine and the work implement;
using a trained first posture estimation model to estimate a target posture for the work implement to assume at work from the elapsed period of time and the mechanical data to thus determine an estimated target posture; and
training a second posture estimation model using training data including the elapsed period of time and the mechanical data as well as the estimated target posture.
